**Europäisches Patentamt**

**European Patent Office**

**Office européen des brevets**

(19)

(11) Veröffentlichungsnummer: **0 339 282**
**A2**

## (12) EUROPÄISCHE PATENTANMELDUNG

(21) Anmeldenummer: **89105595.6**

(22) Anmeldetag: **30.03.89**

(51) Int. Cl.⁴: **B23Q 3/12 , B23B 31/16**

(30) Priorität: **26.04.88 DE 3813982**

(43) Veröffentlichungstag der Anmeldung:
**02.11.89 Patentblatt 89/44**

(84) Benannte Vertragsstaaten:
**AT FR GB IT SE**

(71) Anmelder: **Paul Forkardt GmbH & Co. KG**
**Rosenstrasse 44-46**
**D-4000 Düsseldorf 30(DE)**

(72) Erfinder: **Grund, Gerhard, Dipl.-Ing.**
**Ernst-Lemmer-Strasse 68**
**D-4000 Düsseldorf 13(DE)**
Erfinder: **Kempken, Rainer**
**Donaustrasse 3**
**D-4006 Erkrath-Hochdahl(DE)**

(74) Vertreter: **Patentanwälte Dipl.-Ing. Alex**
**Stenger Dipl.-Ing. Wolfram Watzke Dipl.-Ing.**
**Heinz J. Ring**
**Kaiser-Friedrich-Ring 70**
**D-4000 Düsseldorf 11(DE)**

(54) **Vorrichtung zum Aufspannen eines kraftbetätigten Spannzeuges auf einer Werkzeugmaschinenspindel.**

(57) Die Erfindung betrifft eine Vorrichtung zum Aufspannen eines kraftbetätigten Spannzeuges (2) für Werkstücke oder Werkzeuge auf einer hohlen Werkzeugmaschinenspindel (1), in der eine mit dem Antriebsglied (2c) des jeweils aufgespannten Spannzeuges (2) kuppelbare, von einem am hinteren Ende der Spindel (1) befestigten Druckmittelzylinder betätigbare Spannstange (3) angeordnet und auf deren vorderem Flansch (1a) ein Zwischenring (6) befestigt ist, an dem der Spannzeugkörper (2b) mittels mindestens zweier Spannbolzen (5) befestigbar ist. Um eine konstruktiv einfache und keinen zusätzlichen Druckmittelzylinder benötigende Ausführung zu schaffen, sind die Spannbolzen (5) axial ausgerichtet am Spannzeugkörper (2b) befestigt und jeweils mit einer eine Anzugsfläche (5d) bildenden Nut (5c) versehen, in die ein Keil (7a) einer verschiebbar im Zwischenring (6) geführten Keilstange (7) einfahrbar ist. Mindestens eine der Keilstangen (7) greift mittels einer Verzahnung (7c) in eine Außenverzahnung (11b) eines verdrehbar, aber axial unverschiebbar am vorderen Ende der Spannstange (3) gelagerten Bajonettringes (11) ein, der mit einem am Antriebsglied (2c) des jeweiligen Spannzeuges (2) ausgebildeten Bajonettflansch (10b) zusammenwirkt.

Fig.1

## Vorrichtung zum Aufspannen eines kraftbetätigten Spannzeuges auf einer Werkzeugmaschinenspindel

Die Erfindung betrifft eine Vorrichtung zum Aufpannen eines kraftbetätigten Spannzeuges für Werkstücke oder Werkzeuge auf einer hohlen Werkzeugmaschinenspindel, in der eine mit dem Antriebsglied des jeweils aufgespannten Spannzeuges kuppelbare, von einem am hinteren Ende der Spindel befestigten Druckmittelzylinder betätigbare Spannstange angeordnet und auf deren vorderem Flansch ein Zwischenring befestigt ist, an dem der Spannzeugkörper über zentrale Kegelflächen zentriert mittels mindestens zweier, jeweils mit einer Anzugschräge versehene Spannbolzen befestigbar ist.

Eine derartige Vorrichtung zum Aufspannen eines kraftbetätigten Spannzeuges auf dem vorderen Ende einer hohlen Werkzeugmaschinenspindel ist beispielsweise aus der DE-PS 33 28 291 bekannt. Bei dieser bekannten Ausführung greifen die in radialer Richtung ausgerichteten, in dem am Spindelflansch befestigten Zwischenring gelagerten Spannbolzen mit ihrer Anzugschräge in eine Ringnut ein, die in einem Flanschring ausgebildet ist, der seinerseits am Spannzeugkörper befestigt ist. Zur Zentrierung des am Spannzeugkörper befestigten Flanschringes relativ zu dem am Spindelflansch befestigten Zwischenring dienen an diesen beiden Ringen ausgebildete zentrale Kegelflächen. Die Betätigung der Spannbolzen erfolgt durch mit den Spannbolzen verbundene Kolben, denen das Druckmittel durch in der Spindel verlaufende Druckmittelleitungen zugeführt wird.

Für einen automatischen Schnellwechsel von Spannzeugen an Werkzeugmaschinenspindeln ist es außerdem erforderlich, das Antriebsglied des jeweils aufgespannten Spannzeuges mit der in der hohlen Maschinenspindel angeordneten Spannstange schnell lösbar zu kuppeln, damit das jeweils aufgespannte Spannzeug durch den am hinteren Ende der Spindel befestigten Druckmittelzylinder betätigt werden kann. Bei der aus der DE-PS 33 28 291 bekannten Ausführung erfolgt diese Kupplung mittels eines an der Spannstange angeordneten Kupplungskopfes, der über den Umfang verteilt radial nach außen gerichtete Kupplungsnocken aufweist, die mit radial nach innen vorstehenden Kupplungsvorsprüngen einer Kupplungsaufnahme zusammenwirken, die ihrerseits am Antriebsglied des jeweils aufgespannten Spannzeuges angeordnet sind. In einer dem Entkupplungszustand entsprechenden Drehstellung der Spannstange kann der Kupplungskopf mit seinen Kupplungsnocken zwischen den Kupplungsvorsprüngen hindurch axial in die Kupplungsaufnahmen eingeführt werden. Durch Verdrehen der Spannstange gelangen die Kupplungsnocken hinter die Kupplungsvorsprünge, so daß in dieser Stellung das Antriebsglied des Spannzeuges formschlüssig mit der vom Druckmittelzylinder betätigbaren Spannstange verbunden ist. Um die Spannstange zwischen den beiden einerseits den Entkupplungs- und andererseits den Kupplungszustand entsprechenden Endstellungen zu verdrehen, ist bei der bekannten Vorrichtung zusätzlich zu dem das Antriebsglied des aufgespannten Spannzeuges betätigenden Axialkolbenzylinder ein Drehkolbenzylinder am hinteren Ende der Maschinenspindel angeordnet.

Die aus der DE-PS 33 28 291 bekannte Vorrichtung hat verschiedene Nachteile. Zum einen ist der für den Kupplungsvorgang zwischen Spannstange und Spannzeug-Antriebsglied notwendige Drehkolbenzylinder technisch aufwendig und stellt eine zusätzliche Belastung der Werkzeugmaschinenspindel dar.

Weiterhin schließt dieser Drehkolbenzylinder eine insgesamt hohle Ausbildung der Spannstange aus, so daß keine stangenförmigen Werkstücke durch die Maschinenspindel hindurch dem jeweils eingespannten Spannzeug zugeführt werden können. Zum anderen ergibt sich durch die radiale Ausrichtung der Spannbolzen eine große und radial weit außen liegende Masse sowohl des Zwischenringes als auch insbesondere des die Ringnut für die Spannbolzen aufweisenden Flanschringes, so daß sich für die bekannte Konstruktion ein großes Gewicht und eine hohe Schwungmasse ergeben.

Entsprechende Nachteile hat auch eine weitere, aus der DE-OS 30 45 536 bekannte Spanneinrichtung, die ebenfalls mit radial ausgerichteten Spannbolzen zur Festlegung des Spannzeugkörpers am Spindelflansch versehen ist, bei der die Verriegelung zwischen Spannzeug-Antriebsglied und in der Spindel verlaufender Spannstange jedoch über Kugeln erfolgt, die in Ausnehmungen der Spannstange gehalten und durch eine zusätzliche in der hohlen Spannstange geführte Betätigungsstange derart betätigbar sind, daß sie in entsprechende, kugelkalottenartige Ausnehmungen eines mit dem Antriebsglied verbundenen Kupplungsgliedes eingreifen.

Bei dieser aus der DE-OS 30 45 536 bekannten Vorrichtung ist sowohl zur Betätigung der radialen Spannbolzen über Keilflächen als auch für die axiale Kupplungsbewegung der Betätigungsstange jeweils ein zusätzlicher Spannzylinder am hinteren Ende der Werkzeugmaschinenspindel vorzusehen, so daß insgesamt drei derartige Axialkolbenzylinder verwendet werden müssen, deren jeweils als Rohre ausgebildete Betätigungsstangen insgesamt in der hohlen Maschinenspindel angeordnet sind. Bei einer Störung im Druckmittelsystem besteht die Gefahr, daß sich das Spannzeug vom Spindelflansch löst, so daß trotz eines großen konstruktiven Aufwandes nur eine unzu reichende Funktionssicherheit gegeben ist. Eine sehr ähnliche, mit denselben Nachteilen behaftete Konstruktion zeigt die DE-OS 30 45 537.

Schließlich ist aus der DE-OS 34 10 670 eine weitere Konstruktion bekannt, bei der ein wiederum mit einem Flanschring versehener Spannzeugkörper über eine selbstzentrierende Stirnverzahnung mit einem an der Maschinenspindel befestigten Zwischenring drehfest verbunden ist. Das Festspannen des Flanschringes am Zwischenring erfolgt über eine Mehrzahl von Spannsegmenten, die einen Kragen des Zwischenringes klammerartig mit einer Verbindungshülse kuppeln, die ihrerseits mit der Kolbenstange eines Axialkolbenzylinders verbunden ist. Eine entsprechende Kupplung mittels Segmenten erfolgt zwischen dem vorderen Ende der Spannstange und dem Antriebsglied des jeweils aufgespannten Spannzeuges. Außer einem hohen konstruktiven Aufwand und der Unmöglichkeit, eine durchgehende Bohrung zur Zufuhr von stangenförmigen Werkstücken vorzusehen, haftet dieser bekannten Konstruktion der Nachteil an, daß beide Verriegelungen von der Stellung des jeweiligen Kolbens abhängig sind, so daß beim Auftreten von Fehlern im Druckmittelsystem nicht nur ein Lockern, sondern sogar ein Lösen der Verbindungen auftreten kann.

Ausgehend von der eingangs beschriebenen, aus der DE-PS 33 28 291 bekannten Vorrichtung liegt der Erfindung die Aufgabe zugrunde, eine derartige Aufspannvorrichtung derart auszubilden, daß bei einfacher Konstruktion mit geringem Bauvolumen eine zuverlässige Kupplung sowohl zwischen Spannzeugkörper und Spindelflansch als auch zwischen Antriebsglied und Spannstange erfolgt, ohne daß ein zusätzlicher Betätigungszylinder am hinteren Ende der Maschinenspindel verwendet werden muß, wobei die Möglichkeit bestehen soll, einem aufgespannten Spannzeug durch die Maschinenspindel hindurch stangenförmige Werkstücke zuzuführen.

Die Lösung dieser Aufgabenstellung durch die Erfindung ist dadurch gekennzeichnet, daß die Spannbolzen axial ausgerichtet am Spannzeug befestigt und jeweils mit einer eine Anzugsfläche bildenden Nut versehen sind, in die ein Keil einer verschiebbar im Zwischenring geführten Keilstange einfahrbar ist, und daß mindestens eine der Keilstangen mittels einer Verzahnung in eine Außenverzahnung eines verdrehbar, aber axial unverschiebbar am vorderen Ende der Spannstange gelagerten Bajonettringes eingreift, der mit einem am Antriebsglied des jeweiligen Spannzeuges ausgebildeten Bajonettflansch zusammenwirkt.

Die erfindungsgemäße Konstruktion hat den Vorteil, daß für das Aufspannen des Spannzeugkörpers auf dem Flansch der Werkzeugmaschinenspindel und für das Kuppeln des Spannzeug-Antriebsgliedes mit der in der hohlen Maschinenspindel angeordneten Spannstange kein zusätzlicher Druckmittelzylinder am hinteren Ende der Maschinenspindel erforderlich ist. Während die die Kupplung zwischen Antriebsglied und Spannstange bewirkende Drehbewegung des erfindungsgemäßen Bajonettringes von der Längsverschiebung mindestens einer Keilstange abgeleitet wird, erfolgt die Längsverschiebung der gegebenenfalls über den Bajonettring miteinander verbundenen Keilstangen entweder durch einen Spindelantrieb oder durch eine Druckmittelbetätigung, wobei beide Antriebe in dem am Spindelflansch befestigten Zwischenring angeordnet sind, so daß im Falle der Druckmittelbetätigung in der Maschinenspindel lediglich entsprechende Druckmittelzuleitungen vorgesehen werden müssen. Da die erfindungsgemäße Konstruktion somit mit nur einem Axialkolbenzylinder am hinteren Ende der Maschinenspindel auskommt, besteht die Möglichkeit, die Spannstange als Spannrohr mit einem zentralen Durchgang für die Zufuhr von stangenförmigen Werkstücken zum Spannzeug auszubilden. Die axiale Ausrichtung der Spannbolzen vermeidet große und radial verhältnismäßig weit außen liegende Massen, so daß die erfindungsgemäße Ausbildung mit einem geringen Gewicht und damit einer niedrigen Schwungmasse auskommt.

Obwohl die Möglichkeit besteht, die erfindungsgemäßen Keilstangen in radialer Richtung verschiebbar im Zwischenring anzuordnen, wird gemäß einem weiteren Merkmal der Erfindung vorgeschlagen, die Keilstangen etwa tangential verschiebbar im Zwischenring zu führen, so daß sich für den Zwischenring insgesamt ein geringes Bauvolumen und insbesondere ein kleiner Außendurchmesser ergibt.

Gemäß einem weiteren Merkmal der Erfindung ist mindestens eine Keilstange durch einen Spindelantrieb antreibbar, der vorzugsweise durch einen an den Zwischenring ansetzbaren Kraftantrieb betätigt werden kann. Bei einer alternativen Ausführungsform gemäß der Erfindung ist mindestens eine Keilstange mit mindestens einer Kolbenfläche für einen Druckmittelantrieb versehen. Dieser Druckmittelantrieb kann beispielsweise im Sinne des Lösens gegen eine eingebaute Spannfeder arbeiten, so daß die Spannstellung nach Abschalten der Druckmittelzufuhr durch Federkraft gesichert ist. Selbstverständlich ist es auch möglich, einen doppeltwirkenden Kolben mit der Keilstange zu verbinden, so daß diese in beiden Verschieberichtungen durch ein Druckmittel verschoben werden kann. Falls alle Keilstangen mittels einer Verzahnung in das Außengewinde des Bajonettringes eingreifen, so daß die Keilstangen miteinander über den Bajonettring verbunden sind, genügt es, nur eine Keilstange entweder durch einen Spindelantrieb oder durch einen Druckmittelantrieb anzutreiben.

In der einfachsten Ausführung sind die Spannbolzen am Spannzeugkörper befestigt. Bei einer bevorzugten Ausführungsform können die Spannbolzen auch an einem Lagerring befestigt sein, der seinerseits an der hinteren Stirnfläche des jeweiligen Spannzeuges angeordnet ist. Auf diese Weise ist es möglich, herkömmliche Spannzeuge mit den Spannbolzen auszurüsten, so daß sie für einen automatischen Schnellwechsel verwendet werden können. Um die Sicherheit eines derartigen Schnellwechselvorganges zu erhöhen, wird mit der Erfindung schließlich vorgeschlagen, den Bajonettring und den Bajonettflansch mit Zentrierschrägen zu versehen, die beim Ansetzen des jeweiligen Spannzeuges an den Zwischenring zusammenwirken.

Bei einer alternativen Ausführung kann die mit der Anzugsfläche versehene Nut als Ringnut ausgebildet sein; der Spannbolzen ist in diesem Fall in eine schlüssellochartige Ausnehmung in der Keilstange einführbar, deren Rand als Keilfläche für die Anzugsfläche des Spannbolzens ausgebildet ist.

Mit der Erfindung wird insgesamt eine Vorrichtung zum Aufspannen eines kraftbetätigten Spannzeuges auf dem vorderen Ende einer hohlen Werkzeugmaschinenspindel geschaffen, die bei geringem konstruktiven Aufwand, niedrigem Gewicht und der Möglichkeit einer zentralen Zufuhr stangenförmiger Werkstücke eine hohe Funktionssicherheit besitzt und ohne die Verwendung eines zusätzlichen Druckmittelzylinders am hinteren Spindelende auskommt. Als Spannzeuge, mit denen nicht nur Werkstücke, sondern auch Werkzeuge eingespannt werden können, kommen insbesondere Spannfutter, Spanndorne, Spannzangen, Spannplatten oder entsprechende Werkstück- oder Werkzeug-Spanneinrichtungen in Frage.

Auf der Zeichnung ist ein Ausführungsbeispiel der erfindungsgemäßen Aufspannvorrichtung mit vier Möglichkeiten für die Ausbildung des Keilstangen-Antriebes dargestellt, und zwar zeigen:

Fig. 1 einen Längsschnitt durch den am vorderen Ende einer Maschinenspindel befestigten Zwischenring sowie durch ein an diesem Zwischenring zu befestigendes Spannzeug,

Fig. 2 einen der Fig.1 entsprechenden Längsschnitt während des Aufsetzvorganges,

Fig. 3 einen weiteren Längsschnitt gemäß den Figuren 1 und 2 nach vollendetem Aufspannen des Spannzeuges,

Fig. 4 einen Querschnitt durch den Zwischenring gemäß der Schnittlinie IV - IV in Fig.3 mit einer ersten Ausführung für den Keilstangenantrieb,

Fig. 5 eine abgewandelte Ausführungsform des in Fig.4 dargestellten Spindelantriebes in einem der Fig.4 entsprechenden Querschnitt,

Fig. 6 einen weiteren Querschnitt gemäß der Schnittlinie IV - IV in Fig.3 durch den Zwischenring mit einem Druckmittelantrieb für die Keilstangen,

Fig. 7 eine abgewandelte Ausführungsform zu der Konstruktion nach Fig.6,

Fig. 8 eine alternative Ausführung bezüglich der Spannbolzenverriegelung und

Fig. 9 einen Querschnitt gemäß der Schnittlinie IX - IX in Fig. 8.

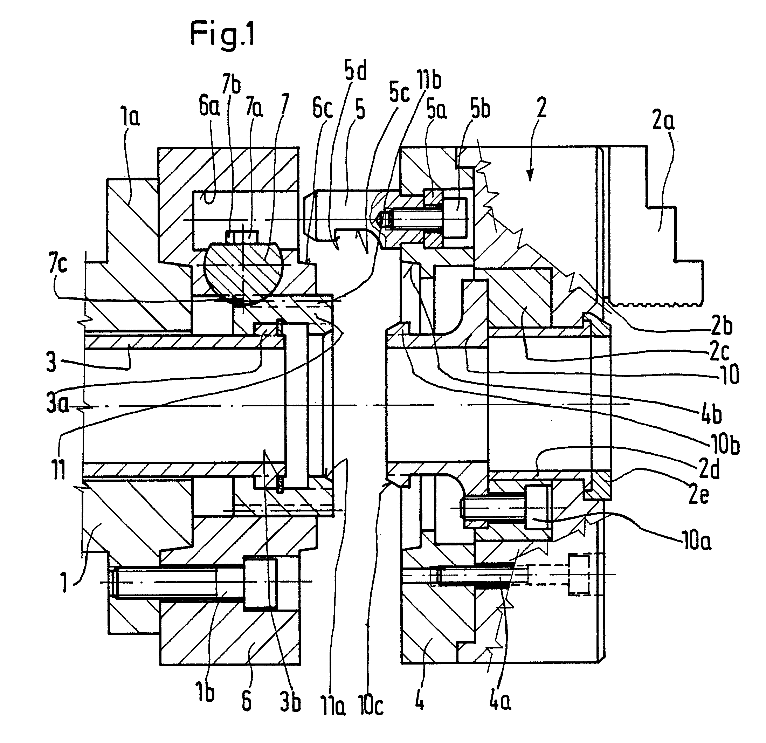

Die Längsschnitte in den Figuren 1 bis 3 zeigen das vordere Ende einer mit einem Flansch 1a versehenen, hohlen Werkzeugmaschinenspindel 1 einer im übrigen nicht dargestellten Werkzeugmaschine. An diesem Flansch 1a soll ein kraftbetätigtes Spannzeug 2 derart befestigt werden, daß es automatisch und innerhalb kürzester Zeit gegen ein anderes Spannzeug 2 gewechselt werden kann. Das in den Figuren 1 bis 3 dargestellte Spannzeug 2 ist als bekanntes Mehrbackenfutter ausgeführt. Die Zeichnungen lassen eine Spannbacke 2a erkennen, die ebenso wie die anderen, nicht gezeichneten Spannbacken radial verschiebbar im Spannzeugkörper 2b geführt ist und durch ein Antriebsglied 2c betätigt wird, das in bekannter, auf der Zeichnung nicht dargestellter Weise mit sämtlichen Spannbacken 2a zusammenwirkt und durch eine Spannstange 3 in axialer Richtung bewegt wird.

Die Spannstange 3 ist in der hohl ausgebildeten Werkzeugmaschinenspindel 1 angeordnet und wird ihrerseits durch einen auf der Zeichnung nicht dargestellten Axialkolbenzylinder betätigt, der am anderen Ende der Werkzeugmaschinenspindel 1 befestigt ist. Beim dargestellten Ausführungsbeispiel ist die Spannstange 3 als Spannrohr mit einem zentralen Durchgang für die Zufuhr von stangenförmigen Werkstücken zum Spannzeug 2 ausgebildet. Die zentrale Bohrung des Spannzeugkörpers 2b ist durch eine Hülse 2d ausgekleidet und frontseitig mit einem Deckelring 2e versehen.

An der Rückseite des Spannzeugkörpers 2b ist mittels Schrauben 4a ein Lagerring 4 befestigt, an dessen Rückseite wiederum axial ausgerichtete Spannbolzen 5 unter Verwendung eines Zwischenstückes 5a durch eine Schraube 5b angeschraubt sind. Jeder der beim Ausführungsbeispiel insgesamt drei Spannbolzen 5 ist an seiner radial innen liegenden Oberfläche mit einer Nut 5c versehen, die eine radial ausgerichtete Anzugsfläche 5d bildet. Diese Ausbildung ist am besten in Fig.1 zu erkennen.

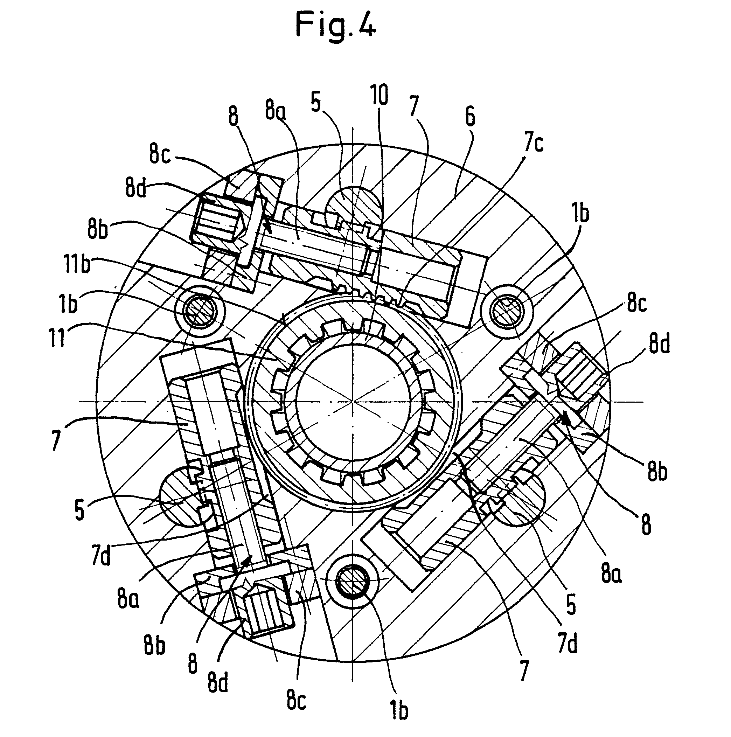

Am vorderen Flansch 1a der Werkzeugmaschinenspindel 1 ist mittels Schrauben 1b ein Zwischenring 6 befestigt, der mit Aufnahmebohrungen 6a für die Spannbolzen 5 ausgebildet ist. In jede dieser Aufnahmebohrungen 6a ragt ein an einer Keilstange 7 ausgebildeter Keil 7a hinein, dessen Anzugschräge 7b mit der Anzugsfläche 5d des jeweiligen Spannbolzens 5 zusammenwirkt. Bei den dargestellten Ausführungsbeispielen sind die Keilstangen 7 mit kreisförmigem Querschnitt ausgeführt und etwa in tangentialer Richtung verschiebbar im Zwischenring 6 geführt, wie insbesondere die Figuren 4 bis 7 erkennen lassen.

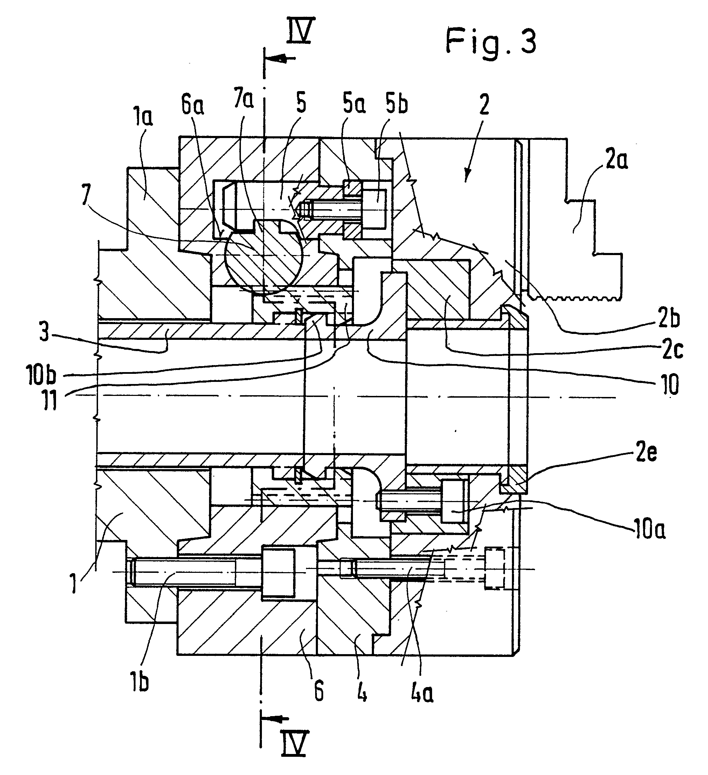

Diese Figuren 4 bis 7 zeigen anhand jeweils eines Querschnittes gemäß der Schnittlinie IV - IV in Fig.3 vier verschiedene Ausführungen für den Antrieb der Keilstangen 7.

Bei der ersten Ausführungsform nach Fig.4 ist jede Keilstange 7, die in Längsrichtung verschiebbar, aber unverdrehbar im Zwischenring 6 geführt ist, mit einem Spindelantrieb 8 versehen. Dieser umfaßt beim Ausführungsbeispiel eine Spindelstange 8a, die mit ihrem Außengewinde in ein Innengewinde der Keilstange 7 eingreift und drehbar, aber axial unverschiebbar über einen Lagerring 8b im Zwischenring 6 gelagert ist. Der Lagerring 8b wird durch einen Lagerdeckel 8c gehalten, durch den der mit einem Innensechskant versehene Spindelkopf 8d herausragt. Ein Drehen der Spindelstange 8a durch einen an den Spindelkopf 8d angesetzten Antrieb bewirkt somit eine Längsbewegung der Keilstange 7 innerhalb des Zwischenringes 6.

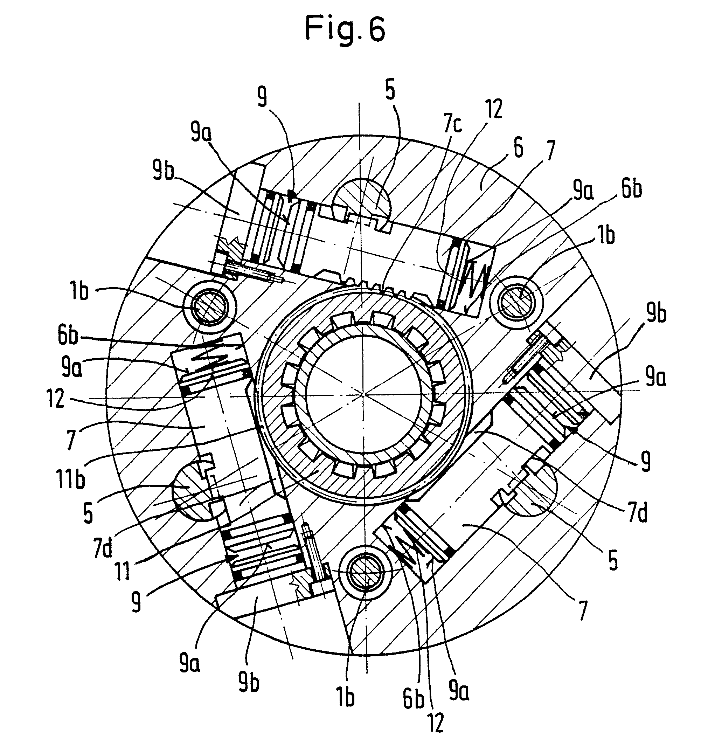

Eine alternative Ausführung des Keilstangenantriebes zeigt Fig.6. Bei dieser Ausführungsform ist jede Keilstange 7 mit einem Druckmittelantrieb 9 versehen. Dieser ist beim Ausführungsbeispiel doppeltwirkend ausgeführt, indem beide Enden jeder Keilstange 7 als Kolbenfläche 9a ausgeführt sind. Durch Beaufschlagung jeweils einer der beiden Kolbenflächen 9a jeder Keilstange 7 kann diese in der gewünschten Richtung innerhalb des Zwischenringes 6 verschoben werden. Der besseren Übersicht wegen sind die zur Zufuhr des Druckmittels notwendigen Druckmittelleitungen bzw. Druckmittelbohrungen in den Zeichnungen nicht dargestellt. Die Fig.6 zeigt lediglich, daß jede jeweils eine Keilstange 7 aufnehmende Zylinderbohrung 6b im Zwischenring 6 durch einen abgedichteten Deckel 9b verschlossen ist.

Um bei Druckausfall die Keilstangen 7 in der Verriegelungsstellung zu halten, sind bei der Ausführung nach Fig.6 Druckfedern 12 vorgesehen, die die Keilstangen 7 in der Sperrstellung halten und deren Federkraft überwunden werden muß, wenn die Keilstangen 7 in die Freigabestellung überführt werden sollen.

Da nicht nur der Spannzeugkörper 2b des jeweiligen Spannzeuges 2 mit dem Flansch 1a der Werkzeugmaschinenspindel 1 verbunden werden muß, sondern auch eine Verbindung zwischen dem Antriebsglied 2c des jeweiligen Spannzeuges 2 mit der Spannstange 3 hergestellt werden muß, ist das Antriebsglied 2c jedes Spannzeuges 2 mit einem Kupplungsstück 10 versehen, das durch Schrauben 10a am Antriebsglied 2c befestigt ist. Am freien Ende ist dieses Kupplungsstück 10 mit einem Bajonettflansch 10b versehen, der eine Zentrierschräge 10c aufweist (siehe Fig.1). Dieser Bajonettflansch 10b wirkt mit einem Bajonettring 11 zusammen, der ebenfalls eine Zentrierschräge 11a aufweist. Bajonettring 11 und Bajonettflansch 10b besitzen sich in radialer Richtung erstreckende Nokken und Aussparungen, so daß diese beiden Teile 10b und 11 in einer bestimmten Stellung in axialer Richtung übereinanderschiebbar sind, nach einer Verdrehung um die Breite einer Nocke bzw. Aussparung jedoch in axialer Richtung formschlüssig aneinander anliegen. Auf diese Weise ist ein Kuppeln und Entkuppeln zwischen dem Bajonettring 11 und dem Bajonettflansch 10b möglich.

Während das den Bajonettflansch 10b aufweisende Kupplungsstück 10 unverdrehbar an dem ebenfalls unverdrehbar im Spannzeugkörper 2b geführten Antriebsglied 2c befestigt ist, ist der Bajonettring 11 axial unverschiebbar, jedoch drehbar am vorderen Ende der Spannstange 3 gelagert, die zu diesem Zweck mit einem Rohrflansch 3a und einem Sprengring 3b versehen ist (siehe Fig.1). Die Verdrehung des Bajonettringes 11 zum Zwecke des Kuppelns bzw. Entkuppelns wird vom jeweiligen Keilstangenantrieb abgeleitet, wie am besten in den Figuren 4 bis 7 zu erkennen ist.

Die Fig. 4 zeigt, daß eine der durch einen Spindelantrieb 8 bewegbaren Keilstangen 7 mit einer zahnstangenartigen Verzahnung 7c versehen ist, die in eine Verzahnung 11b am Umfang des Bajonettringes 11 eingreift. Eine Verschiebung der Keilstange 7 bewirkt somit eine Verdrehung des Bajonettringes 11. Durch geeignete Abstimmung der Bajonettausbildung und der Verzahnungen 7c und 11b wird erreicht, daß gleichzeitig mit einer Verriegelung der Spannbolzen 5 durch die Keilstangen 7 eine Kupplung zwischen Bajonettring 11 und Bajonettflansch 10b erfolgt. Bei der Ausführungsform nach Fig.4 sind die beiden anderen Keilstangen 7 anstelle einer Verzahnung 7c mit einer Aussparung 7d versehen, so daß keine Verbindung zwischen den drei Keilstangen 7 über den Bajonettring 11 bewirkt wird.

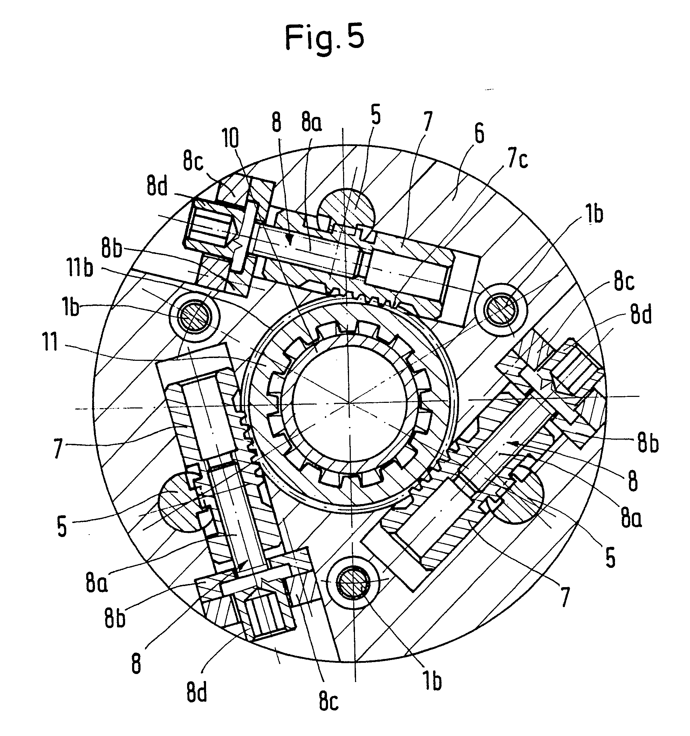

Die in Fig.5 dargestellte Ausführungsform unterscheidet sich von der Ausführung nach Fig.4 lediglich dadurch, daß jede Keilstange 7 mit einer in die Verzahnung 11b des Bajonettringes 11 eingreifenden Verzahnung 7c ausgeführt ist. Auf diese Weise erfolgt eine Verbindung der drei Keilstangen 7 über den Bajonettring 11, so daß es ausreichend sein kann, zur Verriegelung der Spannbolzen 5 und zur Kupplung der Spannstange 3 mit dem Antriebsglied 2c lediglich den Spindelantrieb 8 einer Keilstange 7 zu betätigen.

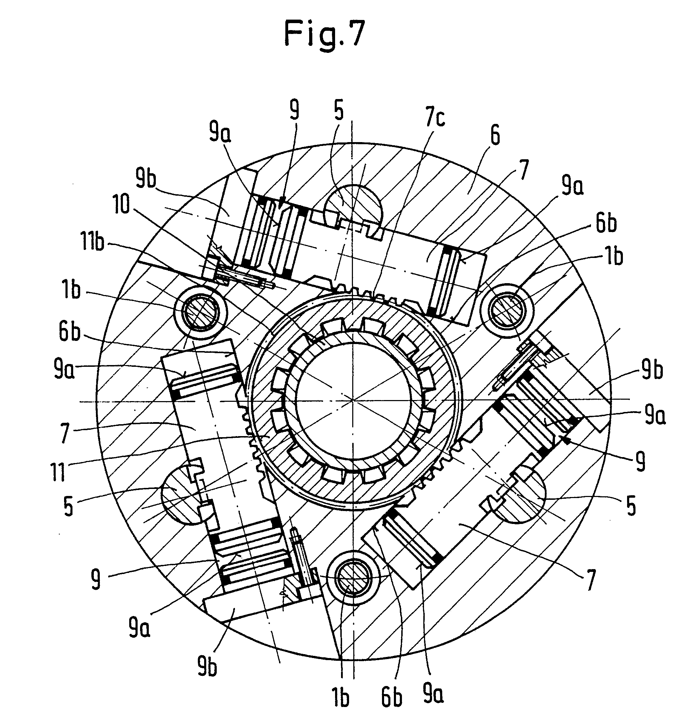

Auch bei Verwendung eines Druckmittelantriebes 9 für die Keilstangen 7 gemäß Fig.6 ist mindestens eine der Keilstangen 7 mit einer Verzahnung 7c versehen. Bei der Ausführungsform nach Fig.6 weisen die beiden anderen Keilstangen 7 wiederum Aussparungen 7d auf. Von dieser Ausführung nach Fig.6 unterscheidet sich die Ausführung nach Fig.7 wiederum dadurch, daß alle drei Keilstangen 7 jeweils mit einer Verzahnung 7c versehen sind, so daß eine Verbindung der drei Keilstangen 7 über den Bajonettring 11 erfolgt.

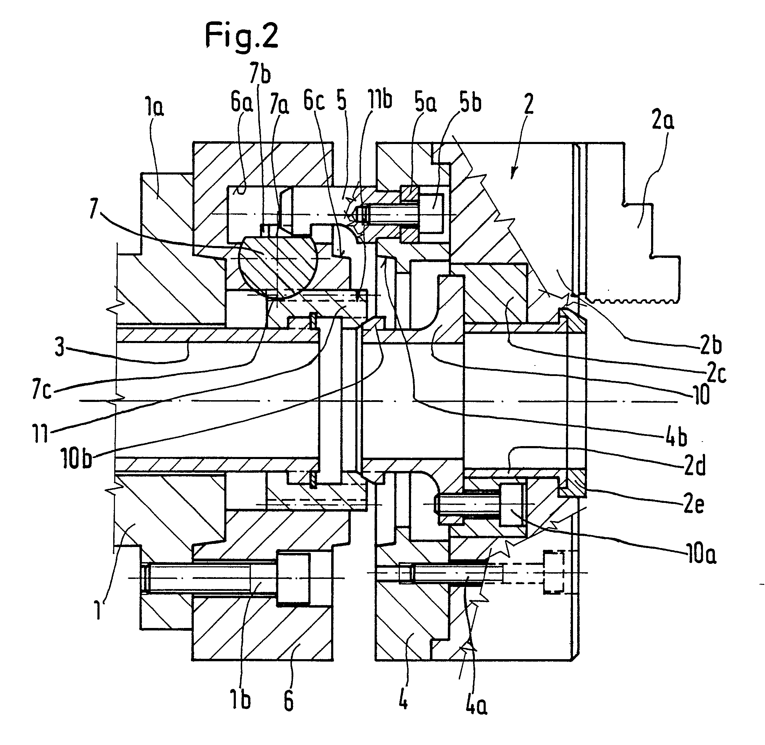

Um ein Spannzeug 2 auf den am Flansch 1a befestigten Zwischenring 6 aufzuspannen, werden die Keilstangen 7 über den jeweiligen Antrieb 8 bzw. 9 derart verschoben, daß ihr Keil 7a außerhalb der Aufnahmebohrung 6a für die Spannbolzen 5 liegt. Hierbei wird gleichzeitig der Bajonettring 11 derart verdreht, daß die radial nach außen weisenden Nocken des Bajonettflansches 10b bei einem axialen Ansetzen des Spannzeuges 2 an den Zwischenring 6 durch entsprechende Aussparungen des Bajonettringes 11 hindurchtreten können. Über die in Fig.1 erkennbaren Zentrierschrägen 10c und 11a erfolgt eine Führung des Kupplungsstückes 10 relativ zum Bajonettring, 11, wenn das Spannzeug 2 aus der in Fig.1 dargestellten Ausgangsposition in die in Fig.2 dargestellte Zwischenposition überführt wird. Gleichzeitig treten die Spannbolzen 5 in die Aufnahmebohrungen 6a des Zwischenringes 6 ein. Bei der weiteren Aufsetzbewegung des Spannzeuges 2 erfolgt eine endgültige Zentrierung des Lagerringes 4 relativ zum Zwischenring 6 über zentrale Kegelflächen 4b und 6c, die am Lagerring 4 bzw. Zwischenring 6 ausgebildet sind und in den Figuren 1 und 2 gekennzeichnet wurden.

Sobald das Spannzeug 2 seine in Fig.3 dargestellte Endstellung erreicht hat, werden die Keilstangen 7 mit Hilfe ihres Spindelantriebes 8 bzw. Druckmittelantriebes 9 derart verschoben, daß ihr Keil 7a mit seiner Anzugschräge 7b an der Anzugsfläche 5d des zugehörigen Spannbolzens 5 anliegt, der auf diese Weise formschlüssig am Zwischenring 6 festgehalten wird. Gleichzeitig mit einer Betätigung der Keilstangen 7 erfolgt eine Verdrehung des Bajonettringes 11, so daß eine Kupplung zwischen diesem Bajonettring 11 und dem Bajonettflansch 10b des Kupplungsstückes 10 und damit eine formschlüssige Verbindung zwischen der Spannstange 3 und dem Antriebsglied 2c des Spannzeuges 2 erfolgt. Das Spannzeug 2 ist somit auf der Werkzeugmaschinenspindel 1 befestigt und kann über den auf der Zeichnung nicht dargestellten Axialkolbenzylinder mittels der Spannstange 3 betätigt werden.

Das Lösen und Abnehmen des Spannzeuges 2 erfolgt in umgekehrter Reihenfolge, wobei wiederum die Entkupplungsbewegung für das Lösen des Antriebsgliedes 2c von der Spannstange 3 von der zum Entriegeln der Spannbolzen 5 notwendigen Verschiebebewegung der Keilstangen 7 abgeleitet wird.

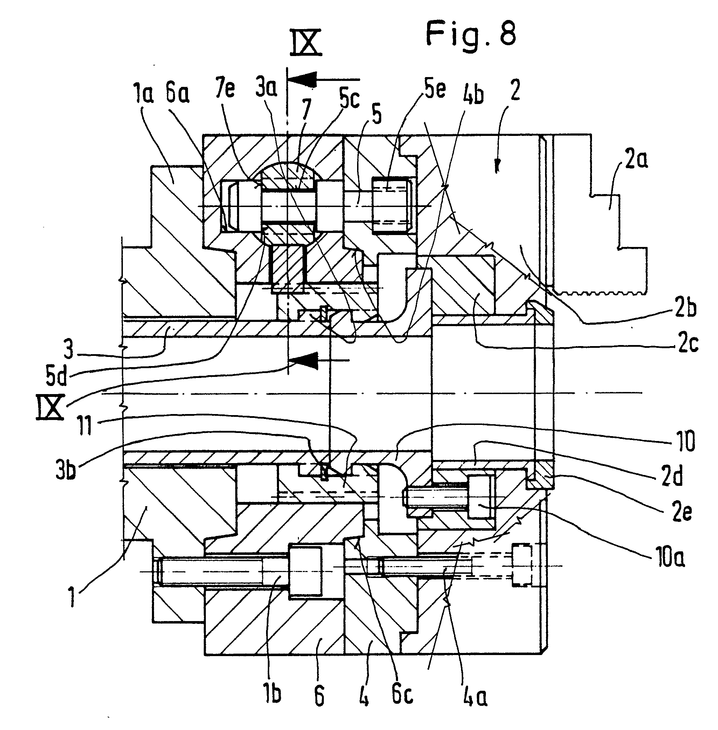

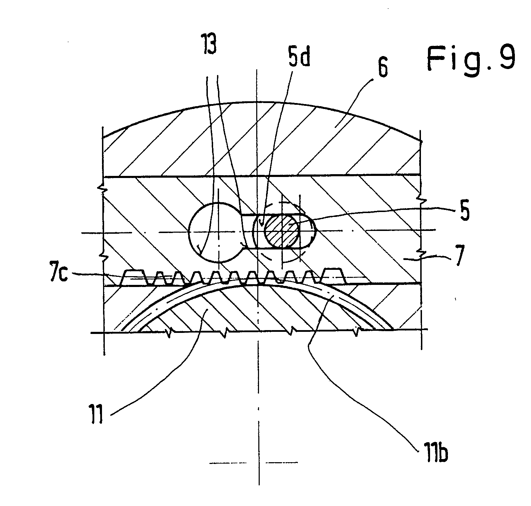

Die Ausführung nach den Figuren 8 und 9 zeigt eine andere Art der Verriegelung der Spannbolzen 5. Diese sind mit einer als Ringnut ausgebildeten Nut 5c versehen. Die Anzugsfläche 5d ist an der dem freien Ende des Spannbolzens 5 zugewandten Ringfläche ausgebildet. Die Befestigung der Spannbolzen 5 am Lagerring 4 erfolgt durch eine auf ein entsprechendes Gewinde aufgeschraubte Mutter 5e.

In jeder Keilstange 7 ist eine schlüssellochartige Ausnehmung 13 ausgebildet, durch deren Öffnung mit dem größten Durchmesser das vordere Ende des Spannbolzens 5 hindurchtreten kann und deren langlochartiger Teil in seiner Breite dem kleineren Durchmesser des Spannbolzens 5 im Bereich der Ringnut entspricht. Der Rand in diesem Bereich ist als Keilfläche 7e ausgebildet, die mit der Anzugsfläche 5d zusammenwirkt.

Wenn der Spannbolzen 5 in die Ausnehmung 13 eingetreten ist und die Keilstange 7 verschoben wird, zieht die Keilfläche 7e über die Anzugsfläche 5d den Spannbolzen 5 in die Verriegelungsstellung. Auch in diesem Fall ist die Keilstange 7 mit einer Verzahnung 7c versehen, um den Bajonettring 11 anzutreiben.

Bezugsziffernliste:

1 Werkzeugmaschinenspindel
1a Flansch
1b Schraube
2 Spannzeug
2a Spannbacke
2b Spannzeugkörper
2c Antriebsglied
2d Hülse
2e Deckelring
3 Spannstange
3a Rohrflansch
3b Sprengring
4 Lagerring
4a Schraube
4b Kegelfläche
5 Spannbolzen
5a Zwischenstück
5b Schraube
5c Nut
5d Anzugsfläche
6 Zwischenring
6a Aufnahmebohrung

6b Zylinderbohrung
6c Kegelfläche
7 Keilstange
7a Keil
7b Anzugschräge
7c Verzahnung
7d Aussparung
7e Keilfläche
8 Spindelantrieb
8a Spindelstange
8b Lagerring
8c Lagerdeckel
8d Spindelkopf
9 Druckmittelantrieb
9a Kolbenfläche
9b Deckel
10 Kupplungsstück
10a Schraube
10b Bajonettflansch
10c Zentrierschräge
11 Bajonettring
11a Zentrierschräge
11b Verzahnung
12 Druckfeder
13 Ausnehmung

**Ansprüche**

1. Vorrichtung zum Aufspannen eines kraftbetätigten Spannzeuges für Werkstücke oder Werkzeuge auf einer hohlen Werkzeugmaschinenspindel, in der eine mit dem Antriebsglied des jeweils aufgespannten Spannzeuges kuppelbare, von einem am hinteren Ende der Spindel befestigten Druckmittelzylinder betätigbare Spannstange angeordnet und auf deren vorderem Flansch ein Zwischenring befestigt ist, an dem der Spannzeugkörper über zentrale Kegelflächen zentriert mittels mindestens zweier, jeweils mit einer Anzugschräge versehene Spannbolzen befestigbar ist,
**dadurch gekennzeichnet,**
daß die Spannbolzen (5) axial ausgerichtet und am Spannzeug (2) befestigt und jeweils mit einer eine Anzugsfläche (5d) bildenden Nut (5c) versehen sind, in die ein Keil (7a) einer verschiebbar im Zwischenring (6) geführten Keilstange (7) einfahrbar ist, und daß mindestens eine der Keilstangen (7) mittels einer Verzahnung (7c) in eine Außenverzahnung (11b) eines verdrehbar, aber axial unverschiebbar am vorderen Ende der Spannstange (3) gelagerten Bajonettringes (11) eingreift, der mit einem am Antriebsglied (2c) des jeweiligen Spannzeuges (2) ausgebildeten Bajonettflansch (10b) zusammenwirkt.

2. Vorrichtung nach Anspruch 1, dadurch gekennzeichnet, daß die Keilstangen (7) etwa tangential verschiebbar im Zwischenring (6) geführt sind.

3. Vorrichtung nach Anspruch 1 oder 2, dadurch gekennzeichnet, daß mindestens eine Keilstange (7) durch einen Spindelantrieb (8) antreibbar ist.

4. Vorrichtung nach Anspruch 1 oder 2, dadurch gekennzeichnet, daß mindestens eine Keilstange (7) mit mindestens einer Kolbenfläche (9a) für einen Druckmittelantrieb (9) versehen ist.

5. Vorrichtung nach mindestens einem der Ansprüche 1 bis 4, dadurch gekennzeichnet, daß die Spannstange (3) als Spannrohr mit einem zentralen Durchgang für die Zufuhr von stangenförmigen Werkstücken zum Spannzeug (2) ausgebildet ist.

6. Vorrichtung nach mindestens einem der Ansprüche 1 bis 5, dadurch gekennzeichnet, daß die Spannbolzen (5) am Spannzeugkörper (2b) befestigt sind.

7. Vorrichtung nach mindestens einem der Ansprüche 1 bis 5, dadurch gekennzeichnet, daß die Spannbolzen (5) an einem Lagerring (4) befestigt sind, der an der hinteren Stirnfläche des jeweiligen Spannzeuges (2) angeordnet ist.

8. Vorrichtung nach mindestens einem der Ansprüche 1 bis 7, dadurch gekennzeichnet, daß der Bajonettring (11) und der Bajonettflansch (10b) mit beim Ansetzen des jeweiligen Spannzeuges (2) an den Zwischenring (6) zusammenwirkenden Zentrierschrägen (11a,10c) versehen sind.

9. Vorrichtung nach mindestens einem der Ansprüche 1 bis 4, dadurch gekennzeichnet, daß die mit der Anzugsfläche (5d) versehene Nut (5c) als Ringnut ausgebildet ist und daß der Spannbolzen (5) in eine schlüssellochartige Ausnehmung (13) in der Keilstange (7) einführbar ist, deren Rand als Keilfläche (7e) für die Anzugsfläche (5d) des Spannbolzens (5) ausgebildet ist.

## Fig.1

# Fig.2

Fig.3

# Fig.4

# Fig.5

Fig.6

# Fig.7

EP 0 339 282 A2

# Fig. 8

Fig. 9